# EUROPEAN PATENT SPECIFICATION

(11) **EP 1 188 326 B1**
(45) Date of publication and mention of the grant of the patent: **06.09.2006**
(21) Application number: 00937476.0
(22) Date of filing: 29.05.2000
(51) Int. Cl.: H04Q 7/22, H04L 12/28

(54) **PROCEDURE AND ARRANGEMENT FOR ACCESS CONTROLLED BUFFERING FOR MOBILE INFORMATION SERVICES**
VERFAHREN UND ANORDNUNG ZUR ZUGRIFFS GESTEUERTEN PUFFERSPEICHERUNG FÜRMOBILE INFORMATIONSDIENSTE
PROCEDURE ET SYSTEME DE MISE EN MEMOIRE TAMPON A ACCES CONTROLE POUR DES SERVICES D'INFORMATIONS MOBILES

(30) Priority: 02.06.1999 SE 9902111
(43) Date of publication of application: 20.03.2002
(73) Proprietor: Telia AB (publ), 123 86 Farsta (SE)
(72) Inventor: HEDSTRÖM, Anders, S-129 32 Hägersten (SE)
(74) Representative: Hopfgarten, Nils
(86) International application number: PCT/SE2000/001104
(87) International publication number: WO 2000/076232

(56) References cited:
- WO-A1-99/13661
- WO-A1-99/16266
- WO-A1-99/37100
- WO-A1-99/48312

## Description

### Field of the invention

The present invention relates to a method and a telecommunications system for access controlled buffering for mobile information services. By mobile information services is meant that a mobile terminal with different kinds of connection from different places derives information from an information supplying server by means of the telecommunications system. The invention facilitates linking of stored information with an end user via a mobile terminal in an efficient way, thanks to the information being buffered in different places in the telecommunication network, depending on the characteristics of the connection that the mobile terminal utilises. The information is buffered in cache memories placed in the network. By that, the information is continuously balanced between the terminal and the information supplier's server.

### Prior art

A certain type of buffering for mobile services exists today. The buffering functions that are described in available reference architectures, for instance the repository function in WAP (WAP-WTA), is, however, primarily utilised to remember previously used services and not to support the existence of, for instance, subscriptions and off-line use. The products that exist on the market today utilise in principle exclusively some kind of channel concept. The channel concept, which inter alia is included in both Netscape's and Microsoft's stationary browsers (version 3.0+), is briefly based on, at certain points of time, loading down information from indicated websites that then can be read off-line. In the mobile solutions, for instance Microsoft's Mobile Channel Architecture, one, instead of a time-bound down-loading, tries to use the synchronisation that the user in any case is making of his/her calendar. The disadvantage of Microsoft's solution is that it is limited to an own format (CDF) which only allows read-only-material.

A competitor of Microsoft is the niche company AdvantGo. AdvantGo offers a server based NT-solution for administration of the mobile user's channels. This is made via a simple web interface. The server also comprises a support for direct synchronisation towards internal databases of companies. On the client side, AdvantGo supports both Palm OS and Windows CE by an own synchronisation software. In contrast to Microsoft's solution, AdvantGo utilises HTML 3.2-format and supports off-line input/framing of questions, which is performed as soon as the terminal is on-line. AdvantGo also includes data compression for faster downloading to the terminal.

WO 99 37100, published 22.07.1999, describes a method for establishing a link in a telecommunication network between a first subscriber with at least two terminals connected to the network and another subscriber. Destination data are transmitted via a data network from a data processing system of the first subscriber to the service control system of the network, whereby the destination data contains information of the type and/or location of the terminal of the first subscriber. On the basis of this destination information the service control system can produce destination information necessary for producing a link with the terminal of the first subscriber in a switching station of the network. This link is subsequently connected to a link with the other subscriber.

WO 99 16266 relates to selectable packet-switched and circuit-switched services in a mobile communications network. Applications running on a mobile station or an external network may specify on an individual application flow basis a requested quality of service. From that requested quality of service an optimal type of bearer to transfer the application flow through the mobile telecommunications network is determined.

Mobile channels of today are primarily designed for downloading on-line and use off-line.

A problem with the known technology is that the amount of information that is to be transferred is so large that the terminal will have long execution times to handle the information, especially at connections with low transmission capacity. The present invention solves the problem by buffering the information in the system, especially in cache memories locally placed. The buffering and the updating of the cache memories is made depending on the characteristics of the available kind of connection of the mobile terminal. At each application, the user first consults the cache memory that is closest, in order to by that obtain shorter response and execution times.

### Summary of the invention

Consequently, the present invention relates to a method for access controlled buffering for mobile information services in a telecommunications system with at least one information supplying server to which mobile terminals are connected by means of different connections. The different connections generally have different performance.

According to the invention, information from the server is buffered in cache memories, which are connected to a respective connection, depending on the performance and/or duration of respective connection. In addition to that, the information from the server is preferably updated in the cache memories according to a schedule that also is depending on the characteristics of respective connection.

The invention also relates to a corresponding telecommunications system. The invention is defined in claim 1 and 8 respectively, whereas preferred embodiments are specified in the subordinate claims.

### Brief description of the drawings

The invention will be described in detail below, with reference to enclosed drawings in which:
Figure 1 is a circle diagram over a normal 24 hour variation for a mobile terminal; and
Figure 2 is a schedule over a telecommunications system according to the present invention.

### Detailed description of preferred embodiments

As has been mentioned in the introduction of the specification, the aim of the invention is to link stored information, for instance sound, video or data, with an end user via a mobile terminal. The class of mobile information services that primarily aims at supporting consumption of large amounts of information, for instance electronic books, electronic newspapers, music services, etc need access to a technical solution that synchronises the content of the terminal with that of the network, i.e. a function that continuously balances the information between the terminal and its main memory, an easily accessed memory in the network, for instance of the type cache memory (network cache) and the information supplier's server.

The aim of the function is that the user at each application first consults the cache memory that is closest, and by that will have a shorter response time.

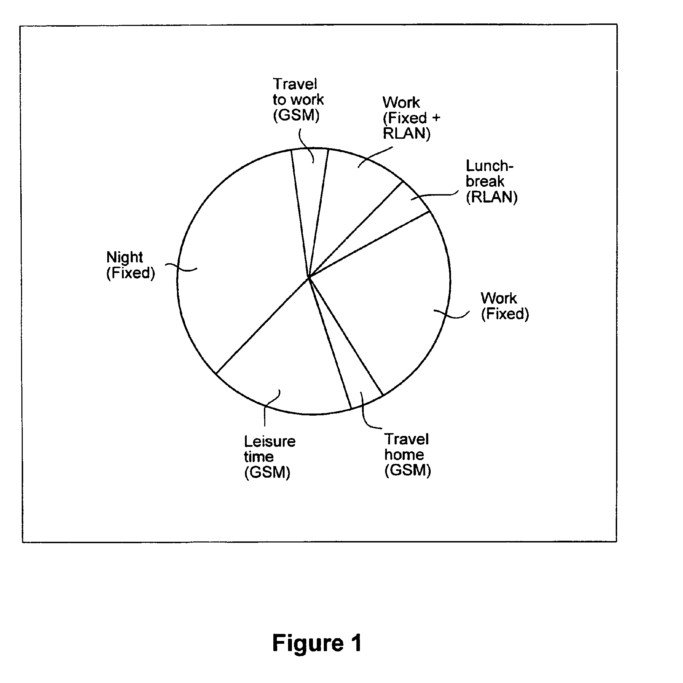

The invention utilises the fact that the user is mobile and that the user's terminal because of that regularly moves around between different radio based or fixed kinds of connection. Figure 1 shows a circle diagram with a typical distribution of different kinds of connection. The day starts, for instance, with a travel to work, where the user can utilise a mobile telephone system, for instance GSM, to connect his/her terminal. When the user is at his/her office/place of work he/she usually has a fixed connection or radio LAN at hand. During the lunch-break he/she may have possibility to connect via radio LAN in another place at the office/place of work, and after that return to his/her ordinary place of work. During the travel home, he/she again can use GSM, as during ordinary leisure time, or during travels for the firm in other places. During the night he/she has at hand a fixed connection, at home, or, for instance, at staying overnight at hotel.

As is shown in Table 1 below, each kind of connection has its own characteristic and suitability to support downloading of information to the mobile terminal, for instance bandwidth, reliability, and cost. These different characteristics can be utilised as a schedule to systematically update the different local places of buffering. For instance during the night, the main memory in the terminal is supplied with new and updated information, at the same time as the "table charger" charges the batteries of the terminal. Also the utilisation of a network connection is rendered more effective by in the background loading down information during a radio LAN-session, with high available bandwidth, in progress.

**Table 1**

| **Kind of connection** | **Characteristics** | **Range of application** |
|---|---|---|
| Fixed (ethernet) | Connection of long duration. High transmission capacity | Downloading - large amounts of data - subscriptions - known interests |
| Radio LAN | Connection of short duration. High transmission capacity. | Downloading - services that are used. On-line navigation and browsing. |
| GSM . | Connection of short duration. Low transmission capacity | Downloading - single object. Updating of interests/subscriptions. Search for new information. |
| Off-line | - | Browsing and consumption of downloaded information. |

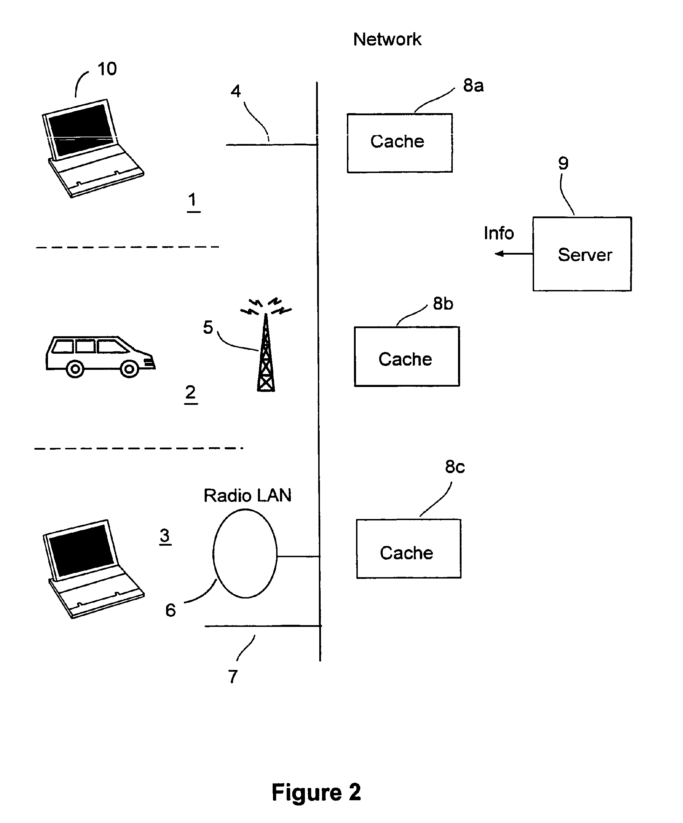

In Figure 2 is shown a telecommunications system according to the invention. A server 9 provides information for distribution in the system or network to mobile terminals 10, which can be connected in different places 1,2,3.

At 1 is shown a terminal 10 in home environment. There a fixed connection 4 is available. A locally placed cache memory 8a buffers information based on connection of long duration and high transmission capacity.

In situation 2 there is the terminal 10, for instance in a car, and the communication is made via a mobile telephone system 5, for instance GSM. The cache 8b stores and updates information according to connection of short duration and low transmission capacity.

In situation 3, the terminal is in office environment. Here both radio LAN 6 and a fixed connection 7 are available, both with high transmission capacity. The connection, however, is usually of shorter duration. A cache memory 8c is updated according to this.

According to the invention, there is a function in the network that registers where the terminal is, and which kinds of connection that at that are used, and respective duration of the connection. The function controls the information from the server so that the different cache memories 8a,8b,8c are updated in the prescribed way. This function can be controlled in many ways and possibly also be controlled from the terminal side.

The above described method and system can be implemented in many ways, as is evident to an expert in the field. The scope of the invention is only limited by the claims below.

## Claims

1. Method for access controlled buffering for mobile information services in a telecommunications system with at least one information supplying server (9) to which mobile terminals (10) are connected by means of different connections (4,5,6,7), which connections have different performance, **characterised in that** information from the server (9) is buffered in cache memories (8a, 8b, 8c), which are connected to a respective connection, depending on performance and/or duration of respective connection (4,5,6,7).

2. Method as claimed in claim 1,
**characterised in that** information from the server (9) is updated in the cache memories (8a,8b,8c), according to a schedule that is depending on the performance and/or duration of respective connection (4, 5, 6, 7).

3. Method as claimed in claim 1, or claim 2, **characterised in that** respective performance includes bandwidth, reliability and cost .

4. Method as claimed in any of the previous claims, **characterised in that**, at a fixed connection with high bandwidth and long duration, large amounts of data, subscriptions and known interests, are downloaded to respective cache memory.

5. Method as claimed in any of the previous claims, **characterised in that** at a radio connection with high bandwidth and short duration, services are loaded down that are used on-line to respective cache memory.

6. Method as claimed in any of the previous claims, **characterised in that** at a radio connection with small bandwidth and short duration, single objects are downloaded, and interests and subscriptions are updated to respective cache memory.

7. Method as claimed in any of the previous claims, **characterised in that** the telecommunications system registers the movements of a mobile terminal (10) and plans the buffering schedule for the different cache memories (8a,8b,Bc).

8. Telecommunications system for access controlled buffering for mobile information services comprising at least one information supplying server (9) to which mobile terminals (10) are connectable by means of different connections (4,5,6,7), which connections have, different performance, **characterised in that** it further comprises cache memories (8a,8b,8c), which are connected in to a respective connection, for buffering of information from the server (9) depending on the performance and/or duration of respective connection (4,5,6,7).

9. System as claimed in claim 8,
**characterised in that** the cache memories (8a,8b,8c) are arranged to update information from the server (9) according to a schedule that is depending on the performance and/or duration of respective connection (4,5,6,7).

10. System as claimed in claims 8 or 9,
**characterised in that** the system is arranged to register the movements of a mobile terminal (10), and to plan the buffering schedule for the different cache memories (8a,8b,8c).

## Patentansprüche

1. Verfahren für zugangsgesteuertes Puffern für mobile Informationsdienste in einem Telekommunikationssystem mit wenigstens einem Information liefernden Server (9), mit dem mobile Endgeräte (10) mithilfe von unterschiedlichen Verbindungen (4, 5, 6, 7) verbunden sind, welche Verbindungen unterschiedliches Betriebsverhalten haben, **dadurch gekennzeichnet, dass** Information vom Server (9) in Cachespeichern (8a, 8b, 8c), die mit einer entsprechenden Verbindung verbunden sind, in Abhängigkeit vom Betriebsverhalten und/oder der Dauer der entsprechenden Verbindung (4, 5, 6, 7) gespeichert wird.

2. Verfahren nach Anspruch 1, **dadurch gekennzeichnet, dass** Information vom Server (9) in den Cachespeichern (8a, 8b, 8c) entsprechend einem Plan aktualisiert wird, der vom Betriebsverhalten und/oder der Dauer der entsprechenden Verbindung (4, 5, 6, 7) abhängt.

3. Verfahren nach Anspruch 1 oder Anspruch 2, **dadurch gekennzeichnet, dass** das entsprechende Betriebsverhalten Bandbreite, Zuverlässigkeit und Kosten einschließt.

4. Verfahren nach einem der vorangehenden Ansprüche, **dadurch gekennzeichnet, dass** bei einer festen Verbindung mit großer Bandbreite und langer Dauer große Mengen von Daten, Abonnements und bekannten Interessen in einen entsprechenden Cachespeicher heruntergeladen werden.

5. Verfahren nach einem der vorangehenden Ansprüche, **dadurch gekennzeichnet, dass** bei einer Funkverbindung mit großer Bandbreite und kurzer Dauer Dienste, die Online benutzt werden, in einen entsprechenden Cachespeicher heruntergeladen werden.

6. Verfahren nach einem der vorangehenden Ansprüche, **dadurch gekennzeichnet, dass** bei einer Funkverbindung mit kleiner Bandbreite und kurzer Dauer einzelne Objekte heruntergeladen werden und Interessen und Abonnements zu einem entsprechenden Cachespeicher aktualisiert werden.

7. Verfahren nach einem der vorangehenden Ansprüche, **dadurch gekennzeichnet, dass** das Telekommunikationssystem die Bewegungen eines mobilen Endgeräts (10) registriert und den Pufferungsplan für die unterschiedlichen Cachespeicher (8a, 8b, 8c) plant.

8. Telekommunikationssystem für zugangsgesteuertes Puffern für mobile Informationsdienste, das wenigstens einen Information liefernden Server (9) aufweist, mit dem mobile Endgeräte (10) mithilfe von unterschiedlichen Verbindungen (4, 5, 6, 7) verbindbar sind, welche Verbindungen unterschiedliches Betriebsverhalten haben, **dadurch gekennzeichnet, dass** es weiter Cachespeicher (8a, 8b, 8c) aufweist, die mit einer entsprechenden Verbindung zum Puffern von Information vom Server (9) in Abhängigkeit vom Betriebsverhalten und/oder der Dauer der entsprechenden Verbindung (4, 5, 6, 7) verbunden sind.

9. System nach Anspruch 8, **dadurch gekennzeichnet, dass** die Cachespeicher (8a, 8b, 8c) dazu ausgebildet sind, Information vom Server (9) entsprechend einem Plan zu aktualisieren, der vom Betriebsverhalten und/oder der Dauer der entsprechenden Verbindung (4, 5, 6, 7) abhängt.

10. System nach Anspruch 8 oder 9, **dadurch gekennzeichnet, dass** das System dazu ausgebildet ist, Bewegungen eines mobilen Endgeräts (10) zu registrieren und den Pufferungsplan für die unterschiedlichen Cachespeicher (8a, 8b, 8c) zu planen.

## Revendications

1. Procédé de mise en mémoire tampon à accès contrôlé pour des services d'informations mobiles dans un système de télécommunication comprenant au moins un serveur fournissant des informations (9) auquel des terminaux mobiles (10) sont connectés au moyen de différentes connexions (4, 5, 6, 7), ces connexions ayant des caractéristiques différentes, **caractérisé en ce que** les informations venant du serveur (9) sont mises en tampon dans des mémoires caches (8a, 8b, 8c) qui sont raccordées à une connexion respective, en fonction des caractéristiques et/ou de la durée d'une connexion respective (4, 5, 6, 7).

2. Procédé selon la revendication 1, **caractérisé en ce que** les informations venant du serveur (9) sont mises à jour dans les mémoires caches (8a, 8b, 8c) conformément à un programme qui dépend des caractéristiques et/ou de la durée d'une connexion respective (4, 5, 6, 7).

3. Procédé selon la revendication 1 ou la revendication 2, **caractérisé en ce que** les caractéristiques respectives comprennent la largeur de bande, la fiabilité et le coût.

4. Procédé selon une quelconque des revendications précédentes, **caractérisé en ce que**, à une connexion fixe de grande largeur de bande et de longue durée, de grandes quantités de données, d'abonnements et d'intérêts connus, sont téléchargées vers une mémoire cache respective.

5. Procédé selon une quelconque des revendications précédentes, **caractérisé en ce que**, à une connexion radio de grande largeur de bande et de courte durée, des services sont téléchargés et sont utilisés en ligne avec une mémoire cache respective.

6. Procédé selon une quelconque des revendications précédentes, **caractérisé en ce que**, à une connexion radio de petite largeur de bande et de courte durée, des objets uniques sont téléchargés, et des intérêts et abonnements sont mis à jour dans la mémoire cache respective.

7. Procédé selon une quelconque des revendications précédentes, **caractérisé en ce que** le système de télécommunication enregistre les mouvements d'un terminal mobile (10) et prépare le programme de mise en tampon pour les différentes mémoires caches (8a, 8b, 8c).

8. Système de télécommunication pour mise en tampon à accès contrôlé pour des services d'information mobiles comprenant au moins un serveur fournissant des informations (9) auquel des terminaux mobiles (10) peuvent être connectés au moyen de différentes connexions (4, 5, 6, 7), ces connexions ayant des caractéristiques différentes, **caractérisé en ce qu'**il comprend en outre des mémoires caches (8a, 8b, 8c) qui sont raccordées à une connexion respective pour mise en tampon d'informations provenant du serveur (9) en fonction des caractéristiques et/ou de la durée de la connexion respective (4, 5, 6, 7).

9. Système selon la revendication 8, **caractérisé en ce que** les mémoires caches (8a, 8b, 8c) sont agencées pour mettre à jour les informations venant du serveur (9) conformément à un programme qui dépend des caractéristiques et/ou de la durée de la connexion respective (4, 5, 6, 7).

10. Système selon la revendication 8 ou 9, **caractérisé en ce que** le système est prévu pour enregistrer les mouvements d'un terminal mobile (10) et établir le programme de mise en tampon pour les différentes mémoires caches (8a, 8b, 8c).
